# EUROPEAN PATENT APPLICATION

(11) **EP 1 257 124 A2**
(43) Date of publication of application: **13.11.2002**
(21) Application number: 02252938.2
(22) Date of filing: 25.04.2002
(51) Int. Cl.: H04N 5/765

(54) **Setting up combination apparatus**

(30) Priority: 10.05.2001 KR 2001025530
(71) Applicant: SAMSUNG ELECTRONICS CO., LTD., Suwon-City, Kyungki-do (KR)
(72) Inventor: Kim, Yong-ho, Suwon-city, Gyunggi-do (KR)
(74) Representative: Geary, Stuart Lloyd

(57) **Abstract**

A combination system has an input unit (117, 180) to input the set-up value, plural set-up value storage units (115, 125) to store the input set-up value, and a controller (114, 123) to control a set-up value storage operation with respect to the set-up value storage units. A user inputs the set-up value as data about an operation mode of each of the devices through the input unit. The controller judges whether the set-up value input into one of the devices is the same type value as a pre-set up value with regard to another device of the system. When the set-up value is determined to be the same type value, then the controller sets up the pre-set up value as a common set-up value with regard to the plural devices. Accordingly, the user does not have to input the set-up value individually for each of the devices.

## Description

The present invention relates to an apparatus comprising first and second subsystems having different functions, memory means for storing set-up data for said subsystems, there being at least on set-up data item type which both subsystems have, user input means and control means for storing set-up data for said subsystems in said memory means in response to signals from the user input means. The present invention also relates to a method of setting up an apparatus having first and second subsystems having different functions, the method comprising receiving a user input indicating the start of setting of a set-up data item for the first subsystem.

A system in which two different apparatuses are combined to form one integrated system is referred to as a 'combination system,' or a 'combo-system.' It may also be referred to as a 'combo.' One example of a combo-system is a DVDP/VCR combo-system developed to comprehensively perform the functions of a DVDP (Digital Video Disc Player) and a VCR (Video Cassette Recorder).

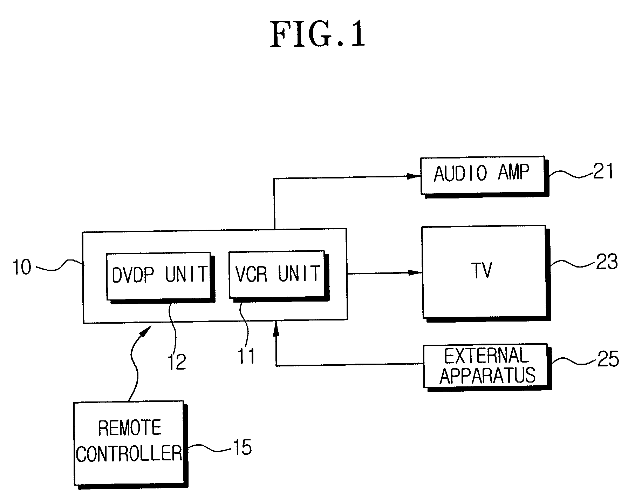

Figure 1 illustrates a DVDP/VCR combo-system and peripheral apparatuses connected to the DVDP/VCR combo-system. The DVDP/VCR combo-system 10 has a VCR unit 11 and a DVDP unit 12. The DVDP/VCR combo-system 10 has the advantage of not only allowing independent operation of the VCR unit 11 and the DVDP unit 12 but also recording video and audio from the DVDP unit 12 onto magnetic tape by the VCR unit 11.

A TV set 23, used as a peripheral device to output the video and the audio reproduced by the DVDP unit 12 and the VCR unit 11 is connected to the DVDP/VCR combo-system. An audio amplifier 21, used as another peripheral device to output the audio reproduced from the DVDP unit 12, is connected to the DVDP/VCR combo-system 10. An external apparatus 25, for instance a camcorder, can also be connected to the DVDP/VCR combo-system 10. The DVDP/VCR combo-system 10 receives video and audio signals from the external apparatus 25 and can record and/or reproduce them.

The VCR unit 11 and the DVDP unit 12 in the DVDP/VCR combo-system 10 are manufactured as one system. Therefore, a user can manipulate mode conversion between the VCR unit 11 and the DVDP unit 12 and individual operations of the VCR unit 11 and the DVDP unit 12 by using a separate input device, such as a remote controller 15 or a control panel (not shown) disposed on the front of the DVDP/VCR combo-system 10.

The combo-system 10 has an advantage that allows the user to enjoy various functions in one system without having the devices 11, 12 provided as separate units. However, the user must separately set up set-up value data such as mode set-up data required for the proper operation of the devices 11, 12, frequently causing an inconvenience to the user.

In other words, the user must input data in order to operate the DVDP unit 12 properly. The data relates to the language to be reproduced or set-up values, such as passwords, to prevent reproduction of a certain programmes. To input the set-up value, the user must perform several operations, such as selecting a language in a selection menu provided on the screen of the TV 23 through an OSD (On-screen Display) operation. In the conventional combo-system 10, the user must repeat the set-up value input operation with regard to the DVDP 12 and the VCR unit 11 respectively.

An apparatus according to the present invention is characterised in that the control means is configured such that, in the event of a signal from the user input means indicating setting up of a data item of a type, which both subsystems have, for the first subsystem, the control means can copy the corresponding set-up data item for the second subsystem, if such exists, to provide the set-up data item for the first subsystem.

Preferably, the control means is configured such that, in the event of a signal from the user input means indicating setting up of a data item of a type, which both subsystems have, for the second subsystem, the control means can copy the corresponding set-up data item for the first subsystem, if such exists, to provide the set-up data item for the second subsystem.

Preferably, the control means comprises a first controller comprised in the first subsystem and a second controller comprised in the second subsystem.

Preferably, the first controller is configured such that, in the event of a signal from the user input means indicating setting up of a data item of a type, which both subsystems have, for the first subsystem, it sends a request to the second controller for the corresponding data item of the second subsystem.

Preferably, the first controller is configured such that, in the event of a signal from the user input means indicating setting up of a data item of a type, which both subsystems have, for the second subsystem, it sends the corresponding data item of the first subsystem, if such has already been set.

The memory means comprises a first set-up data memory comprised in the first subsystem and a second set-up data memory comprised in the second subsystem. However, a shared memory may be used.

In a preferred embodiment, the first subsystem is a VCR and the second subsystem is a DVD player.

A method according to the present invention is characterised by responding to said user input by determining whether a corresponding data item has been set for the second subsystem and, if so, copying the corresponding data item to provide said set-up data item for the first subsystem.

Embodiments of the present invention will now be described, by way of example, with reference to Figures 2 to 11 of the accompanying drawings, in which:
Figure 1 is a schematic block diagram of a conventional DVDP/VCR combination system;
Figure 2 is a block diagram of a DVDP/VCR combination system according to the present invention;
Figures 3 and 4 are flowcharts illustrating set up operations of the combination system in Figure 2;
Figure 5 is a block diagram of another DVDP/VCR combination system according the present invention;
Figure 6 shows one example of an OSD screen for setting up the language for a combination system according to the present invention;
Figures 7 to 10 show examples of OSD screens when a set up language is used in a DVDP unit according to an embodiment of the present invention; and
Figure 11 shows one example of the OSD screen where a set up password is used for parental control of a DVDP unit according to the present invention.

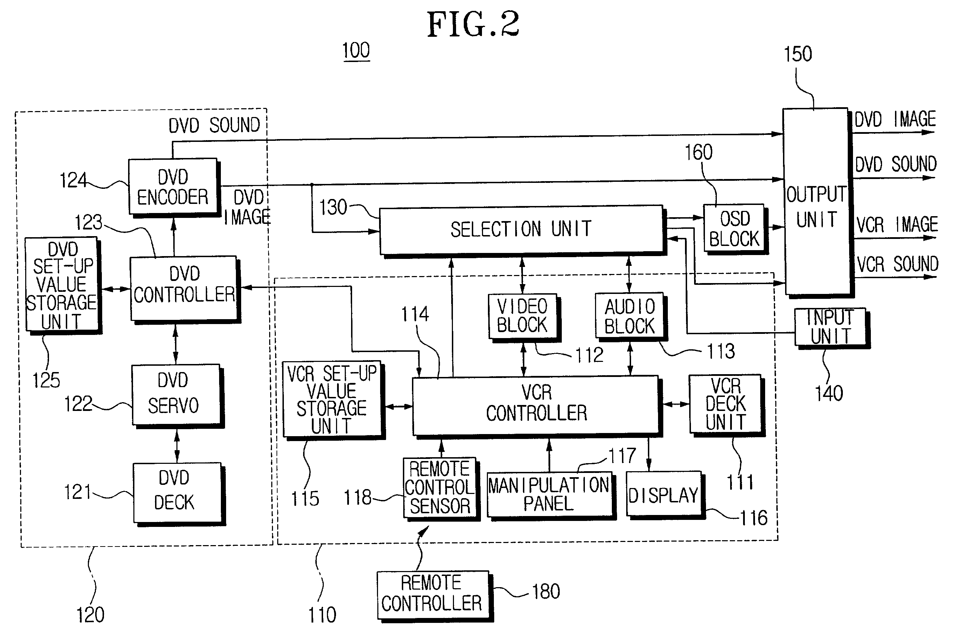

Referring to Figure 2, a DVDP/VCR combo system 100 comprises a VCR unit 110, a DVDP unit 120, a selection unit 130 to perform a selection operation with respect to signals output by the VCR unit 110 and the DVDP unit 120, an input unit 140 to provide signals input from an external apparatus, such as a camcorder, to the selection unit 130, an output unit 150 to provide the signals output by the DVDP unit 120 and the VCR unit 110 to peripheral devices, such as TVs or an amplifiers, and an OSD block 160 to add an OSD images to the image signal output from the VCR unit 110 and the DVDP unit 120.

The VCR unit 110 comprises a VCR deck 111 for recording signals on magnetic tape and reproducing signals recorded on magnetic tape, a video block 112 and an audio block 113 for transmitting video and audio signals to be recorded by or which have been reproduced by the VCR deck 111 and a VCR controller 114 for controlling the operation of the VCR deck 111, the video block 112 and the audio block 113. The VCR unit 110 further comprises a display 116 for displaying a operational information, a control information and the operating mode of the VCR unit 110 so that a user can know the status of the VCR unit 110, a control panel 117 for enabling a user to input various commands and a remote control sensor 118 for receiving control signal from a remote controller 180 operated by a user.

The VCR unit 110 has a VCR set-up value storage unit 115 for store set-up values. The VCR set-up value storage unit 115 stores the set-up values required for operation of the VCR unit 110, such as the language and a password set up by the user. The VCR set-up value storage unit 115 can be constructed using conventional memory. The VCR set-up value storage unit 115 can exist within the VCR or outside of the VCR as a separable memory. In an embodiment non-volatile memory is used.

The storage and retrieval of the VCR set-up value data in the VCR set-up value storage unit 115 is performed by the VCR controller 114. The set-up value data that the user inputs by manipulating the remote controller 180 or the control panel 117 is input into the VCR controller 114. Then the VCR controller 114 stores the data in the VCR set-up value storage unit 115. The VCR controller 114 controls each part in the VCR unit 110 based on the set-up value stored in the VCR set-up storage unit 115 when the VCR unit 110 is operated. For example, when the language set up in the VCR set-up value storage unit 115 is English, the language of the OSD data is English and English is used in OSD screens.

The DVDP unit 120 has a DVD deck 121, a DVD servo 122, a DVD controller 123 and a DVD encoder 124. The DVD deck 121 reads data from DVDs so as to reproduce the signals recorded thereon. The DVD servo 122 controls the position and a speed of the DVD deck 121. The DVD encoder 124 outputs DVD video data and DVD audio data by receiving the data that the DVD deck 121 has read through the DVD controller 123. The DVD controller 123 controls the entire operation of the DVD deck 121, the DVD servo 12 and the DVD encoder 124.

The DVDP unit 120 has a DVD set-up value storage unit 125 for storing set-up values. The DVD set-up value storage unit 125 stores set-up values such as a suer-selected language and a password set up by the user, required for the operation of the DVD unit 120 as in the above mentioned VCR set-up value storage unit 115. The DVD set-up value storage unit 125 can also exist within the DVD controller 123 or outside of the DVD controller 123 as a separable memory. Moreover, the DVD set-up value storage unit 125 can be constructed using conventional volatile or non-volatile memory.

The storage and the retrieval of the data in the DVD set-up value storage unit 125 is performed by the DVD controller 123, and the detailed operation is the same as the above mentioned operation of the VCR controller 114. Yet, it is shown that units such as the remote control sensor 118 and the control panel 117 to input the data only exist in the VCR unit 110 in Figure 2. Therefore, when the user inputs the data to be stored in the DVD set-up value storage unit 125, the data is transmitted to the DVD controller 123 from the VCR controller 114. Then, the transmitted data is input into the DVD set-up value storage unit 125 by the DVD controller 123.

Furthermore, as described later in more detail, the DVD controller 123 and the VCR controller 114 reciprocally transmit the set-up value data so that the DVD unit 120 and the VCR unit 110 can commonly use set-up values input by the user.

The output of the DVD encoder 124 and the outputs of the video block 112 and the audio block 113 and the signal from the input unit 140 are input into the selection unit 130. The selection unit 130 operates to select between these signals under the control of the VCR controller 114 and the DVD controller 123. The output of the selection unit 130 is input into the OSD block 160 and the output unit 150.

The OSD block 160 adds the OSD signals to the signal input from the selection unit 130. Therefore, an image to be added to the video to be displayed on the TV screen is created by the OSD block 160. Typically, the OSD signal provides control menus the DVDP unit 120 and the VCR unit 110 and set-up menus.

The output unit 150 outputs DVD video signals, DVD audio signals, VCR video signals and VCR audio signals which are received from the DVD encoder 124, the selection unit 130 and the OSD block 160. Peripheral devices such as a TV or an amplifier are connected to the output unit 150 and thus the video and the audio are output by the peripheral devices.

The input unit 140 is connected to the selection unit 130 and transmits signals, input from the outside, to the selection unit 130. An output terminal of an external apparatus, such as a camcorder, is connected to the input unit 140. Therefore, a signal recorded in an external apparatus can be transmitted to the combo-system 100 through the input unit 140. Moreover, the signal can be recorded on magnetic tape using the VCR unit 110 or reproduced through a TV.

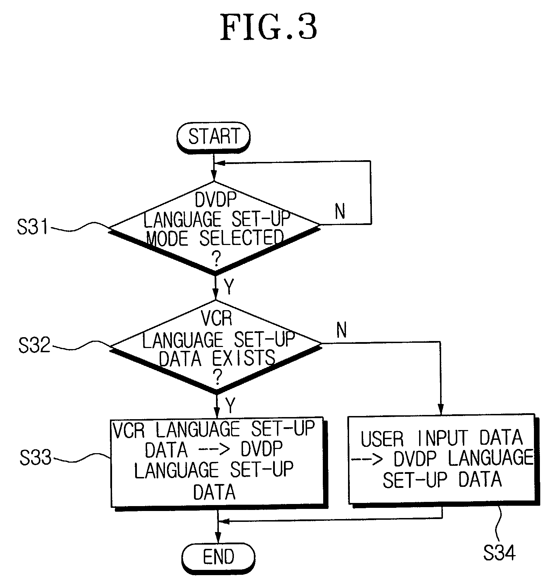

Referring to Figure 3, when the user selects the operation of setting up the set-up value in the DVDP unit 120, the OSD block 160 outputs set-up value setting menus and the set-up value setting menus are displayed on the TV screen. When the user selects a language set-up mode from among the set-up value setting menus by manipulating the remote controller 180 (S31), a language set-up mode selection signal is transmitted to the VCR controller 114 via the remote control sensor 118.

The VCR controller 114 determines whether language set-up value data about exists among the set-up value data stored in the VCR set-up value storage unit 115 (S32). If language data exists, the VCR controller 114 transmits the data to the DVD controller 123, then the DVD controller 123 stores the received data in the DVD set-up value storage unit 125 (S33). Accordingly, the language set-up value data pre-set in the VCR unit 110 is stored as the set-up value data of the DVDP unit 120.

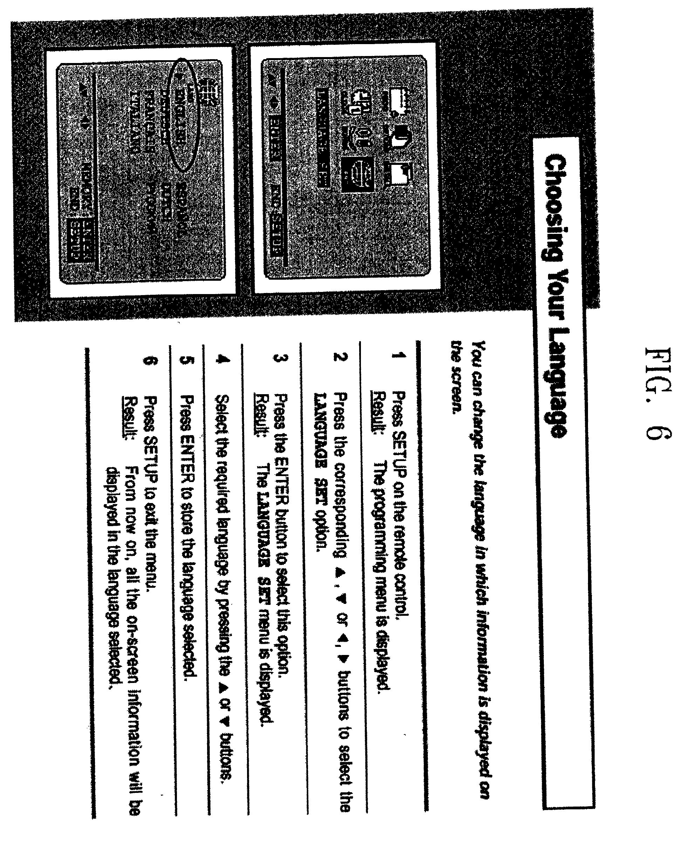

If there is no language set-up value data in the VCR set-up value storage unit 115, the VCR controller 114 waits for the user to input the language set-up value. When the user inputs the data, the VCR controller 114 transmits the input data to the DVD controller 123. The input of the data is assisted by OSD images on the TV screen. In other words, when there is no language set-up value data, the OSD block 160 outputs a language selection screen, as illustrated in Figure 6, and the screen is displayed on the TV. The user can select one language from among a plurality of languages listed in the language selection screen using a cursor movement key and an enter key. When the user selects a language by using the remote controller 180, the selection of the user is transmitted to the VCR controller 114. The DVD controller 123 receives the user input data transmitted from the VCR controller 114 and stores it in the DVD set-up value storage unit 125 (S34) and, by doing so, a language set-up operation in the DVDP unit 120 is completed.

When the DVDP unit 120 is reproducing, the DVDP unit 120 refers to the language data stored in the set-up value storage unit 125 of the DVDP unit 120. Then, the audio in the selected language is output. Furthermore, sometimes subtitle data corresponding to the selected language is displayed. Accordingly, the user can enjoy the video and audio output in his/her selected language.

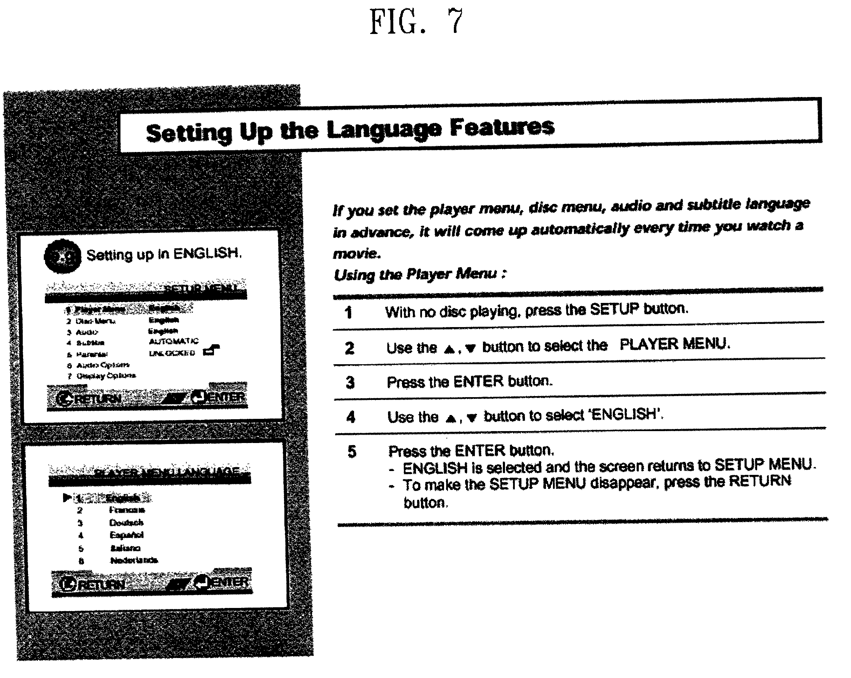

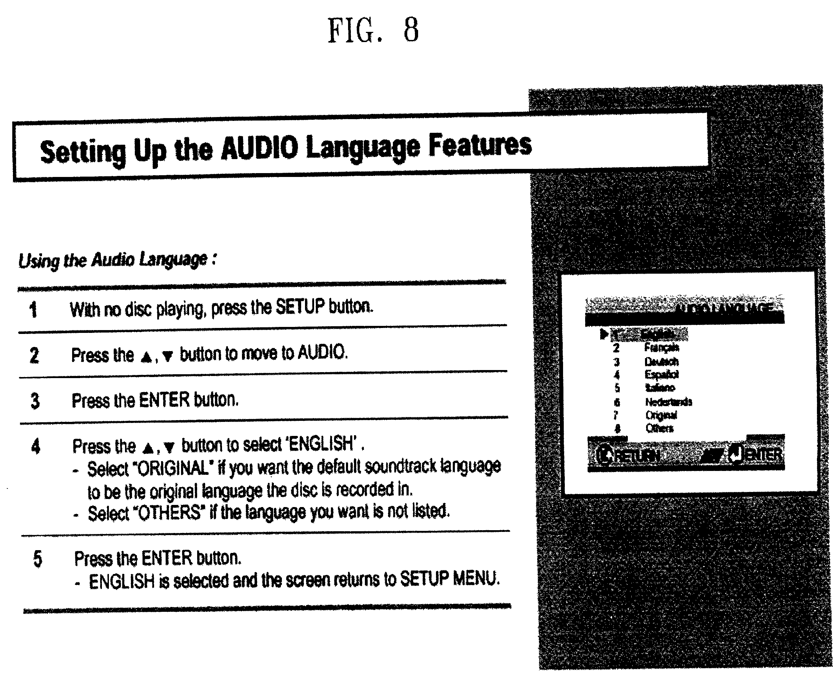

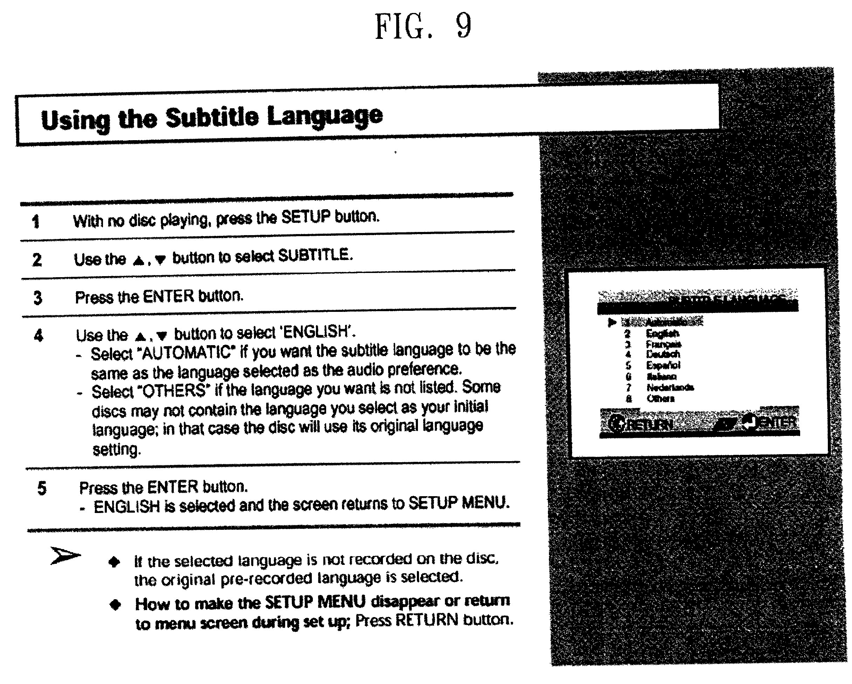

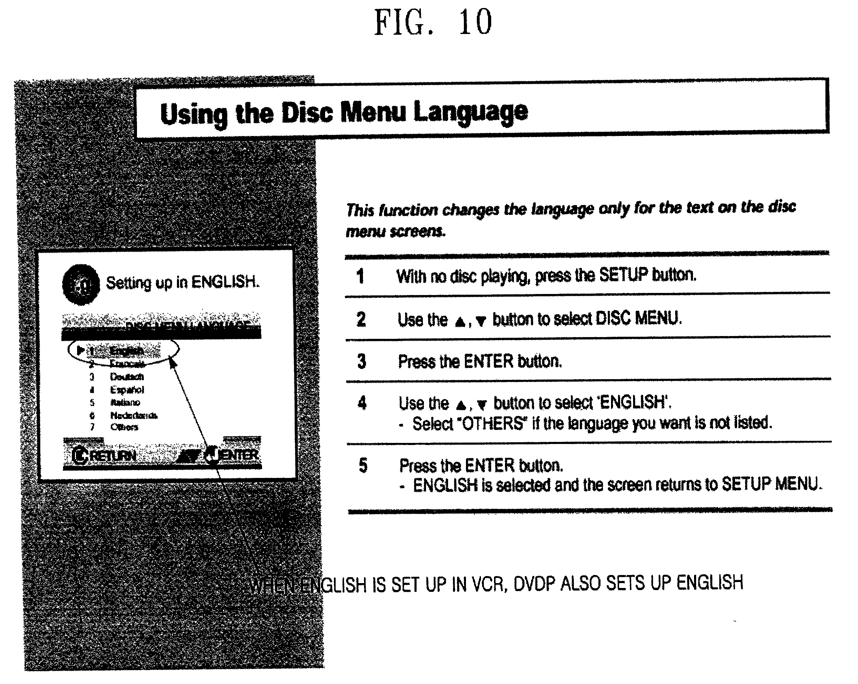

In addition, when the user controls various operations of the DVDP unit 120 or sets up a new set-up value using the remote controller 180, the OSD block 160 outputs screens as illustrated in Figures 7 to 10. Therefore, the user can refer to various menu screens provided in English by manipulating the remote controller 180, and can input various commands using the same.

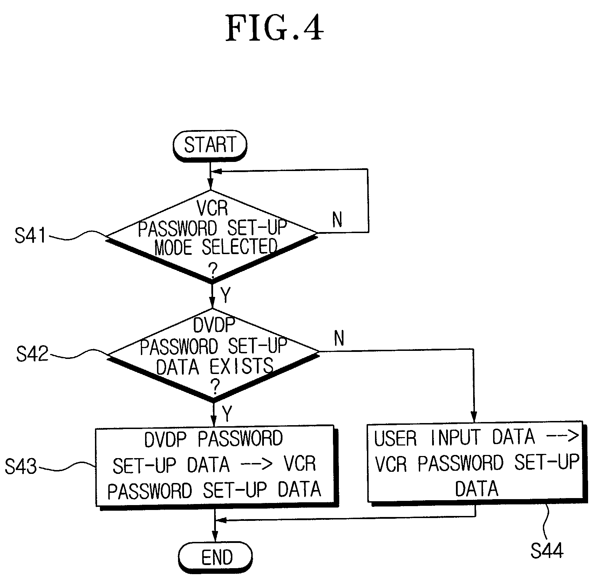

Referring to Figure 4, in another embodiment, when the user selects the VCR setting up option for setting up the VCR unit 110, the OSD block 160 outputs the set-up menus and the TV displays the set-up menus on its screen. If the user selects a password set-up mode among the set-up menus output on the TV screen by manipulating the remote controller 180 (S41), a password set-up mode selection signal is transmitted to the VCR controller 114 through the remote control sensor 118. The VCR controller 114 transmits the password set-up mode selection signal to the DVD controller 123.

The DVD controller 123 determines whether the password set-up value data exists among the set-up value data stored in the DVD set-up value storage unit 125 (S42). If password set-up value data exists, the DVD controller 123 transmits the data to the VCR controller 114, then the VCR controller 114 stores the received data in the VCR set-up value storage unit 115 (S43). Accordingly, the password set-up value data pre-set in the DVDP unit 120 is stored as the set-up value data for the VCR unit 110.

If there is no password set-up value data in the DVD set-up value storage unit 125, the DVD controller 123 transmits the non-existence of the data to the VCR controller 114. The VCR controller 114 displays a password menu screen to the user by controlling the OSD block 160. The VCR controller 114 waits for the user to input the password set-up value data while the menu screen is being displayed. When the user inputs the password data by manipulating the remote controller 180, the input data is input into the VCR set-up value storage unit 115 by the VCR controller 114 (S34). Accordingly, by doing so, the password set-up for the VCR unit 110 is completed.

The VCR unit 110 and the DVDP unit 120 can be configured to request input of a password before performing operations. In this case, when the user inputs the password, the VCR unit 110 and the DVDP unit 120 determined whether the password data stored in the set-up value storage units 115, 125 is the same as the input password. Then, only when the input password is the same as the stored password data, the VCR unit 110 and the DVDP unit 120 perform the operation corresponding to the input command that the user has input using the remote controller 180.

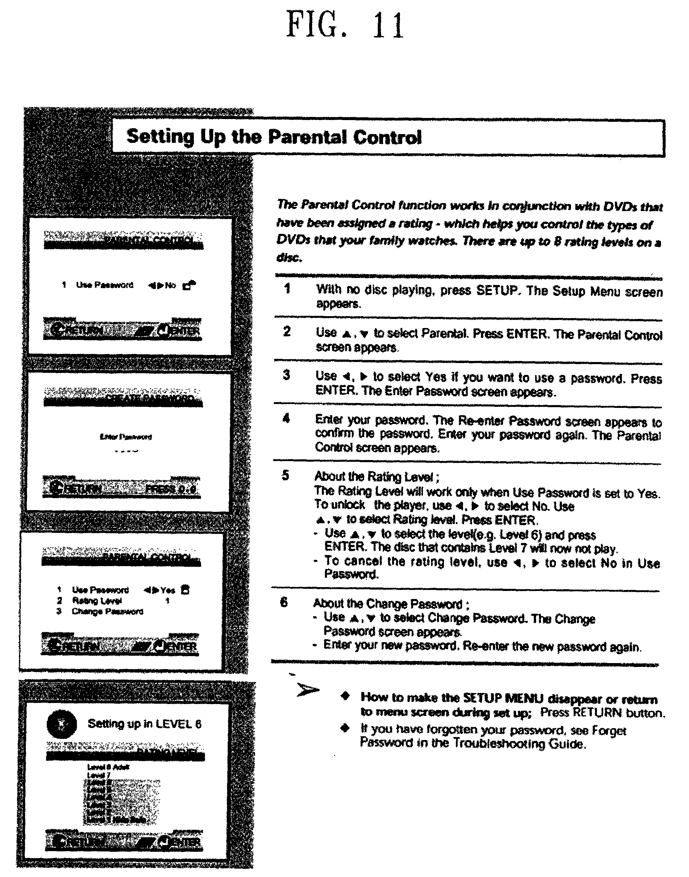

Moreover, the DVDP unit 120 can use the above password as a password to allow a special program or a special scene to be watched. In other words, the password can be used as a parental control mechanism. Figure 11 illustrates an example of an OSD screen provided for the user to perform operations such as the input and the change of the password for parent control.

As described above, since the DVD controller 123 and the VCR controller 114 input the set-up value data into the DVD set-up value storage unit 125 and the VCR set-up value storage unit 115 by transferring the set-up value data to each other, the user can allow the DVDP unit 120 and the VCR unit 110 to use common set-up value data. Therefore, the user can set up the value of the DVDP unit 120 and the VCR unit 110 by setting up the value only once.

An embodiment of the present invention provides that the above set-up operation can be performed only when the set-up value input by the user is needed for both the DVDP unit 120 and the VCR unit 110. For example, when the DVDP unit 120 cannot record data input from outside on the DVD and the VCR unit 110 can record data input from outside on the magnetic tape, the set-up value for a recording mode is not a set-up value needed by both the DVDP unit 120 and the VCR unit 110. Accordingly, when the user inputs record mode set-up value, it is set up only in the VCR set-up value storage unit 115. Thus, undesired data can be prevented from being used commonly by allowing only the data needed commonly for the DVDP unit 120 and the VCR unit 110 to be transferred to each other.

Furthermore, only when the user inputs a command to allow the DVDP unit 120 and the VCR unit 110 to commonly use the set-up value through the remote controller 180 or the control panel 110, can it be set up in both the DVD set-up value storage unit 125 and the VCR set-up value storage unit 115. Accordingly, it is preferable that an operation to judge the input of the command for common use of the set-up value is further performed between the step of S32 (or S42) and the step of S33 (or S43). In other words, when a set-up value data which the user desires to set up is the same as that of the set-up value which already exists (S32 or S42), a menu to input whether the user desires to commonly use the set-up value is provided by using the OSD operation. When the user selects the common use of the set-up value through the menu, operation S33 (or S43) is performed. When the user selects not to commonly use the set-up value, then the step S34 (or S44) can be set up to be selected.

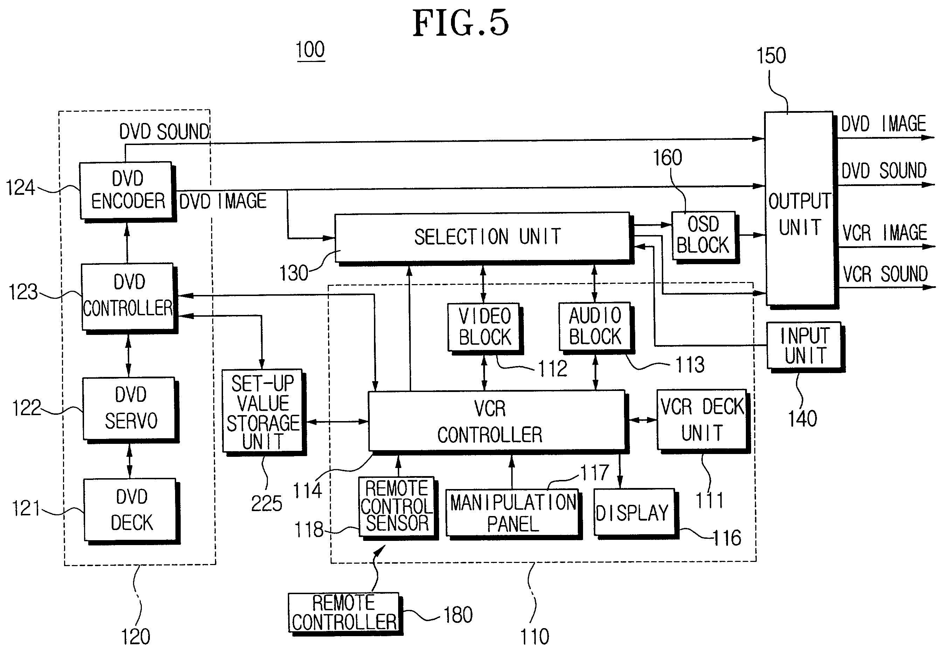

In the embodiment of Figure 5, a DVDP/VCR combination system 100 having one set-up value storage unit 225 is provided. Therefore, the set-up value data input through the remote controller 180 or the control panel 117 is input into the set-up value storage unit 225 through the VCR controller 114. The set-up value data is input into the set-up value storage unit 225 by the VCR controller 114 regardless of whether the current operation mode of the combo system 100 is the DVDP mode or the VCR mode. When the user selects the value set-up mode, the OSD block 160 provides the value set-up menu having a list of all set-up values needed for the operation of the DVDP unit 120 and the VCR unit 110.

When the DVDP unit 120 and the VCR unit 110 operate, the DVD controller 123 and the VCR controller 114 read the set-up value needed to operate the DVDP unit 120 and the VCR unit 110 from the set-up value storage unit 225. Thus, the DVDP unit 120 and the VCR unit 110 commonly use the set-up values set up in one set-up value storage unit 225.

According to the present invention, since each of the devices commonly use the set-up value input by the user, the user does not have to input the set-up value individually with regard to each of the devices.

## Claims

1. An apparatus comprising:
first and second subsystems (110, 120) having different functions;
memory means (115, 125; 225) for storing set-up data for said subsystems (110, 120), there being at least on set-up data item type which both subsystems (110, 120) have;
user input means (117, 180); and
control means (114, 123) for storing set-up data for said subsystems (110, 120) in said memory means (115, 125; 225) in response to signals from the user input means (117, 180),
**characterised in that**
the control means (114, 123) is configured such that, in the event of a signal from the user input means (117, 180) indicating setting up of a data item of a type, which both subsystems (110, 120) have, for the first subsystem (110), the control means (114, 123) can copy the corresponding set-up data item for the second subsystem (120), if such exists, to provide the set-up data item for the first subsystem (110).

2. An apparatus according to claim 1, wherein the control means (114, 123) is configured such that, in the event of a signal from the user input means (117, 180) indicating setting up of a data item of a type, which both subsystems (110, 120) have, for the second subsystem (120), the control means (114, 123) can copy the corresponding set-up data item for the first subsystem (110), if such exists, to provide the set-up data item for the second subsystem (120).

3. An apparatus according to claim 2, wherein the control means (114, 123) comprises a first controller (114) comprised in the first subsystem (110) and a second controller (123) comprised in the second subsystem (120).

4. An apparatus according to claim 3, wherein the first controller (114) is configured such that, in the event of a signal from the user input means (117, 180) indicating setting up of a data item of a type, which both subsystems (110, 120) have, for the first subsystem (110), it sends a request to the second controller (123) for the corresponding data item of the second subsystem (120).

5. An apparatus according to claim 3 or 4, wherein the first controller (114) is configured such that, in the event of a signal from the user input means (117, 180) indicating setting up of a data item of a type, which both subsystems (110, 120) have, for the second subsystem (120), it sends the corresponding data item of the first subsystem (110), if such has already been set.

6. An apparatus according to any preceding claim, wherein the memory means (115, 125) comprises a first set-up data memory (115) comprised in the first subsystem (110) and a second set-up data memory (125) comprised in the second subsystem (120).

7. An apparatus according to any preceding claim, wherein the first subsystem (110) is a VCR and the second subsystem (120) is a DVD player.

8. A method of setting up an apparatus having first and second subsystems (110, 120) having different functions, the method comprising receiving a user input indicating the start of setting of a set-up data item for the first subsystem (110), **characterised by** responding to said user input by determining whether a corresponding data item has been set for the second subsystem (120) and, if so, copying the corresponding data item to provide said set-up data item for the first subsystem (110).

9. A combination system in which a plurality of devices to perform independent operations are combined therein, comprising:
an input unit to input a set-up value representing data about an operation mode of said plurality of devices;
a plurality of set-up value storage units respectively disposed in each of said plurality of devices, said plurality of set-up value storage units used to store data about the set-up value; and
a controller to control said set-up value storage units so that an existing set-up value stored in one of said set-up value storage units is stored in another of said set-up value storage units when data input to said another of said set-up value storage units through said input unit is a same type of data as the existing set-up value stored in said one of said set-up value storage units.

10. The combination system according to claim 9, wherein said controller controls said plurality of set-up value storage units so that the existing set-up value is stored in said another of the set-up value storage units when a command for common use of the set-up value is input through the input unit.

11. A combination system in which a plurality of devices to perform independent functions are combined therein, comprising:
a plurality of set-up value storage units, respectively disposed in each of said plurality of devices, said plurality of set-up value storage units used to store data about the set-up value of each of said plurality of devices; and
a controller to control each of said set-up value storage units to store a set-up value pre-stored in one of said set-up value storage units into another of said set-up value storage units.

12. The combination system according to claim 11, wherein the controller controls said set-up value storage units to store the set-up value stored in said one of said set-up value storage units into said another of said set-up value storage units when the set-up value is data commonly required for each of said plurality of devices.

13. The combination system according to claim 11, further comprising an input unit to input the set-up value into at least one of the set-up value storage units,
wherein the controller controls said set-up value storage units to store the pre-stored set-up value into said one of said set-up storage units which is a set-up target storage unit when data about the set-up value input through the input unit is pre-stored in another of the set-up value storage units.

14. The combination system according to claim 13, wherein the controller controls the set-up value storage units to store the pre-stored set-up value into said one of said set-up value storage units which is a set-up target storage unit when a user inputs a command for common use of the set-up value through said input unit.

15. A combination system, comprising:
a plurality of devices to perform independent operations;
an input unit to input a set-up value with regard to said plurality of devices; and
a set-up value storage unit to store the set-up value input through said input unit,
wherein each of said plurality of devices commonly has the set-up value stored in the set-up value storage unit and performs individual operations thereof based on the set-up value.

16. A method of setting up a combination system in which a plurality of devices to perform independent operations are combined therein, comprising :
judging whether a set-up value input into at least one of said plurality of devices is a same type of value as a pre-stored set-up value with regard to another device among said plurality of devices; and
setting up the pre-stored set-up value as a common set-up value of said plurality of devices when the input set-up value and the pre-stored set-up value are judged to be the same type during said judging .

17. The method of setting up a combination system according to claim 16, further comprising setting up one of the plurality of devices as a set-up target device with the input set-up value when judged as a different type of value during the judging .

18. The combination system according to claim 15, wherein one of said plurality of devices is a VCR unit and the another of said plurality of devices is a DVDP unit, and said set-up value storing unit is external to both said VCR unit and said DVDP unit.

19. The combination system according to claim 10, wherein said existing set-up value data stored in one of said set-up value storage units includes data about a language to be used.

20. The combination system according to claim 10, wherein said existing set-up value data stored in one of said set-up value storage units includes data about a password to be used.

21. The combination system according to claim 10, wherein one of said plurality of devices is a VCR unit and another of said plurality of devices is a DVDP unit.

22. A method of operating a combination system including a DVDP and a VCR when an operation to set up set-up values in the DVDP is selected, the method comprising:
displaying set-up value setting menus including language set-up modes on a screen;
transmitting a language set-up mode selection signal to the VCR when a language set-up mode among the set-up value setting menus is selected;
judging whether set-up value data about the language exists among set-up value data stored in the VCR, and if the set-up value data about the language exists in the VCR, then transmitting the set-up value data from the VCR to the DVDP and storing the set-up value data therein, otherwise wait for set-up value about the language to be input into the combination system and then transmitting the input set-up value data from the VCR to the DVDP.

23. The method of operating a combination system according to claim 22, wherein the displaying is performed by an OSD block.

24. The method of operating a combination system according to claim 23, wherein the transmitting a language set-up mode selection signal is transmitted to a VCR controller through a remote control sensor.

25. The method of operating a combination system according to claim 24, wherein the judging is performed by the VCR controller.

26. A method of setting up a DVDP/VCR combination system when an operation to set up data about a password in the VCR unit is selected, the method comprising:
outputting set-up menus including password set-up modes on a screen;
transmitting a password set-up mode selection signal to the VCR;
transmitting the password set-up mode selection signal to the DVDP;
judging whether the set-up value data about the password exists among set-up value data stored in the DVDP, and if the set-up value data about the password exists, transmitting the data to the VCR, otherwise transmitting the non-existence of the data to the VCR, waiting for the set-up value data about the password to be input, and then inputting the input data about the password to the VCR.

27. The method of setting up a DVDP/VCR combination system according to claim 26, wherein the outputting is performed by an OSD block.

28. The method of setting up a DVDP/VCR combination system according to claim 26, wherein the transmitting a password set-up mode selection signal to the VCR is transmitted to a VCR controller through a remote control sensor.

29. The method of setting up a DVDP/VCR combination system according to claim 26, wherein the transmitting a password set-up mode selection signal to the DVDP is performed by the VCR controller.

30. The method of setting up a DVDP/VCR combination system according to claim 26, wherein the judging is performed by a DVDP controller.

31. The method of setting up a DVDP/VCR combination system according to claim 26, wherein input of the password is requested before permitting input data to perform an operation.

32. A combination VCR/DVDP system comprising:
a VCR unit having a first set-up mode storing unit to store data about set-up values of said VCR unit;
a DVDP unit having a second set-up mode storing unit to store data about set-up values of said DVDP unit;
an input unit to input set-up values representative of operation modes of said DVD unit and said VCR unit; and
a controller to reciprocally transmit the set-up value data such that said DVD unit and said VCR unit can commonly use the input set-up values such that a set-up value of said DVDP unit and the set-up value of said VCR unit are set up only once.

33. The combination VCR/DVDP system according to claim 32, wherein the set-up operation is performed only when the set-up value input is commonly needed for said DVDP unit and said VCR unit.

34. The combination VCR/DVDP system according to claim 32, wherein the set-up operation is performed only when a command to allow said DVDP unit and said VCR unit to commonly use the set-up value is input through said input unit.

35. The combination VCR/DVDP system according to claim 32, wherein said first and second set-up mode storing units are non-volatile memory storing units.
